# FASCICULE DE BREVET EUROPEEN

(11) **EP 2 867 817 B1**
(45) Date de publication et mention de la délivrance du brevet: **20.01.2021**
(21) Numéro de dépôt: 13744606.8
(22) Date de dépôt: 21.06.2013
(51) Int. Cl.: G06F 21/35, G06F 21/41

(54) **PROCÉDÉ D'AUTHENTIFICATION D'UN DISPOSITIF POUR L'ACCÈS À UN SERVICE**
VERFAHREN ZUR AUTHENTIFIZIERUNG EINER VORRICHTUNG FÜR DEN ZUGANG ZU EINEM DIENST
METHOD FOR AUTHENTICATING A DEVICE FOR ACCESS TO A SERVICE

(30) Priorité: 28.06.2012 FR 1256160
(43) Date de publication de la demande: 06.05.2015
(73) Titulaire: ORANGE, 75015 Paris (FR)
(72) Inventeur: MARAIS, Charles, F-22300 Lannion (FR); GOURMELEN, Gaël, F-22700 Louannec (FR)
(86) Numéro de dépôt international: PCT/FR2013/051457
(87) Numéro de publication internationale: WO 2014/001695

(56) Documents cités:
- EP-A2- 2 456 164
- WO-A1-2009/139890
- WO-A1-2010/094330
- WO-A2-2006/101561
- US-A1- 2008 098 466
- US-A1- 2009 178 112

## Description

### Domaine technique

L'invention se rapporte à un procédé d'authentification d'un utilisateur d'un dispositif appartenant à un groupe de dispositifs auprès d'un service rendu par un fournisseur de service.

L'invention trouve une application particulièrement avantageuse dans le domaine des systèmes à authentification unique permettant à un utilisateur disposant de plusieurs dispositifs de s'authentifier un nombre limité de fois.

### Etat de la technique

L'accès d'un client à un service offert par un fournisseur de service est généralement précédé d'une étape préalable d'enregistrement de l'utilisateur auprès du service. Cette étape préalable est suivie d'une étape de délivrance d'informations secrètes, telles qu'un nom d'utilisateur (ou identifiant) et d'un mot de passe, partagées entre le client et le service. Ensuite, lors d'un accès au service, lorsque le client est un utilisateur, ce dernier saisi ses données personnelles sur un dispositif via, par exemple, une interface graphique ; après saisie, les données personnelles sont transmises au fournisseur, qui les vérifie et autorise l'accès lorsque ces données correspondent aux informations secrètes fournies lors de l'étape de délivrance. Une fois l'accès autorisé, l'utilisateur accède au service. A l'inverse, le fournisseur refuse l'accès lorsque ces données ne correspondent à aucune donnée enregistrée.

La demandes européenne EP2456164 (Samsung Electronics Co. Ltd.) et WO2010/094330 (NOKIA SIEMENS NETWORK OY) décrivent des solutions pour s'authentifier auprès de serveurs. En particulier, EP2456164 décrit une méthode visant à partager les informations d'un compte détenu auprès d'un fournisseur de service entre deux dispositifs accédés par un même utilisateur.

Aujourd'hui, un même utilisateur (ou groupe d'utilisateurs), peut posséder plusieurs dispositifs, en particulier dans un réseau domestique. Il est désormais courant de trouver plusieurs dispositifs connectés à un même réseau domestique. Les dispositifs visés sont par exemple des télévisions, des ordinateurs (fixes ou portables), des ordiphones (traduction du terminal anglo-saxon de « smartphones »).

Dans ce réseau, l'accès à un service depuis deux dispositifs nécessite deux authentifications distinctes. Par exemple, cela peut se traduire par une phase de saisie, sur chaque dispositif, d'un identifiant et d'un mot de passe, ce qui n'est pas souhaitable car les utilisateurs des deux dispositifs souhaitant un accès au service peuvent appartenir à un même groupe d'utilisateurs, voire être les mêmes utilisateurs.

### L'invention

L'invention vient améliorer la situation.

A cet effet, selon un aspect fonctionnel, l'invention a pour objet un procédé d'authentification d'un utilisateur d'un premier dispositif lors d'un accès à un service offert par un fournisseur de service, le premier dispositif appartenant à un groupe de dispositifs d'un réseau local incluant un second dispositif d'un utilisateur disposant d'un module d'identification pour s'identifier et s'authentifier auprès du service, caractérisé en ce qu'il comprend
- une étape de diffusion préalable au cours de laquelle le deuxième dispositif diffuse spontanément au premier dispositif une possibilité de fourniture d'une preuve d'une authentification,
   et en ce que lorsque le premier dispositif souhaite s'authentifier
- une étape de demande (ET14,ET22), par le premier dispositif au second dispositif, d'une preuve d'une authentification réussie vis-à-vis du service, la preuve incluant l'identité de l'utilisateur du second dispositif,
- une étape de transmission (ET16,ET23) depuis le second dispositif à destination du premier dispositif de la preuve,
- une étape d'authentification (ET18,ET25) de l'utilisateur du premier dispositif à la base de la preuve reçue.

L'invention propose ainsi de partager des preuves d'authentifications réussies entre dispositifs d'un même groupe de dispositifs. On verra dans la suite qu'un même groupe de dispositifs peut être des dispositifs d'un réseau local.

L'étape préalable est une étape de proposition spontanée, par le deuxième dispositif, d'au moins une preuve. Cette étape de proposition spontanée évite au premier dispositif d'interroger le ou les deuxièmes dispositifs, s'ils sont plusieurs, pour savoir s'ils peuvent fournir une preuve.

De cette façon, lorsqu'un dispositif possède une preuve d'authentification réussie vis-à-vis du service, l'invention évite une nouvelle authentification si un dispositif du même groupe souhaite un accès au même service.

Selon un mode de réalisation, le procédé comprend une étape préalable d'identification d'au moins un dispositif du groupe apte à fournir une preuve. Grâce à cette caractéristique, optionnelle, on connaît préalablement à une demande d'accès à un service, le ou les dispositifs aptes à fournir un service d'identité et donc apte à fournir une preuve ; le gain en temps est donc non négligeable surtout si le nombre de dispositifs aptes à fournir une preuve est important.

Selon un aspect matériel, l'invention a trait à un programme informatique comportant des instructions pour la mise en œuvre du procédé défini ci-dessus, lorsque ce programme est exécuté par un processeur. Un tel programme peut utiliser n'importe quel langage de programmation. Il peut être téléchargé depuis un réseau de communication et/ou enregistré sur un support lisible par ordinateur.

Selon un autre aspect matériel, l'invention a trait à un dispositif, dit second dispositif, comprenant un module de communication pour communiquer avec un réseau de communication et accéder à un service apte à être délivré par un fournisseur de services et dont l'accès est précédé d'une d'authentification, caractérisé en ce qu'il comprend
- un module de diffusion apte à diffuser spontanément, à d'autres dispositifs, une possibilité de fourniture d'une preuve d'une authentification,
- un module de transmission de preuve (MOD-TRS) apte à transmettre, sur demande, une preuve d'authentification réussie relative à un service à destination d'un premier dispositif à des fins d'authentification d'un utilisateur (UT) du premier dispositif pour l'accès au service.

Selon un autre aspect matériel, l'invention a trait à un dispositif, dit premier dispositif, comprenant un module de communication pour communiquer avec un réseau de communication et accéder à un service apte à être délivré par un fournisseur de services et dont l'accès est précédé d'une d'authentification, caractérisé en ce qu'il comprend un module de traitement
- apte à recevoir depuis un deuxième dispositif, un message indiquant une possibilité de fourniture d'une preuve d'une authentification, le message étant diffusé spontanément par le deuxième dispositif,
- apte à requérir une preuve au deuxième dispositif,
- apte à recevoir depuis le deuxième dispositif une preuve d'authentification réussie relative à un service,

Le module est également apte à transmettre la preuve reçue sur le réseau à des fins d'authentification d'un utilisateur du premier dispositif pour l'accès au service.

Enfin, selon un dernier aspect matériel, l'invention a trait à un système informatique comprenant un premier dispositif tel défini ci-dessus et un second dispositif tel que défini ci-dessus.

Bien entendu, chacun de ces dispositif comporte des moyens logiciels tels que des instructions du programme informatique précité, ces instructions étant exécutées par des moyens physiques tels qu'au moins un processeur et une mémoire de travail.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
Les figures 2 et 3 représentent schématiquement les circuits inclus dans le premier et le deuxième dispositif, respectivement.
Les figures 4 et 5 illustrent des échanges de données entre l'ordinateur, l'ordiphone, la passerelle et un serveur hébergeant un service de type WEB ou http, selon deux modes de réalisation, respectivement.

### Description détaillée d'un exemple de réalisation illustrant l'invention

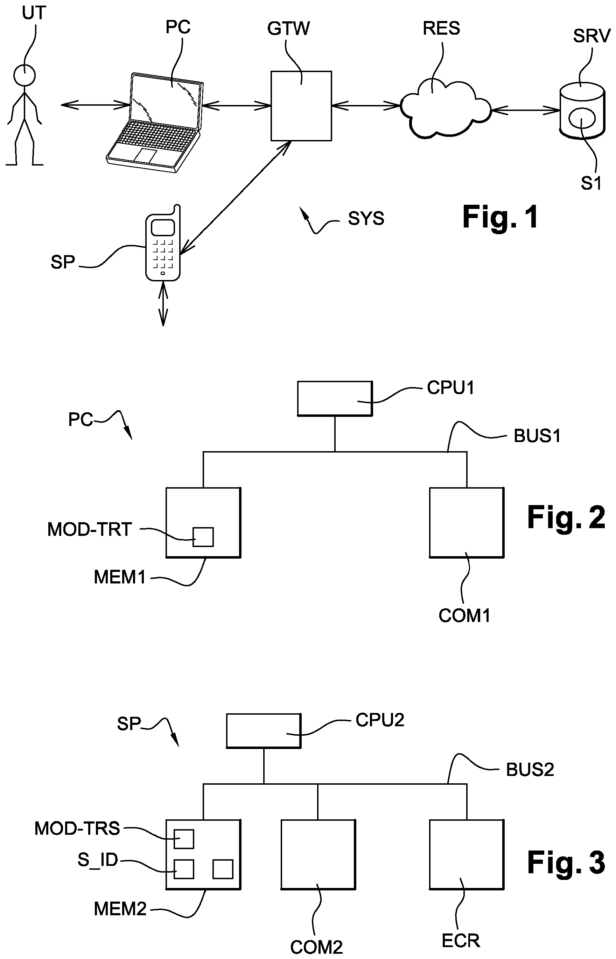

La figure 1 représente un système SYS comprenant un réseau local incluant deux dispositifs illustrés au moyen d'un ordinateur PC et d'un ordiphone SP. L'ordinateur est un ordinateur fixe ou portable telle qu'une tablette.

Les dispositifs sont équipés de ressources physiques et logicielles. En l'espèce, en référence à la figure 2, l'ordinateur comprend
- un processeur CPU1, dit premier processeur,
- un module de stockage MEM1, dit premier module de stockage,
- un module de communication COM1, dit premier module de communication, pour établir une connexion avec l'extérieur en particulier avec une passerelle GTW.

Un utilisateur UT utilise cet ordinateur en vue d'accéder à un service S1.

En référence à la figure 2, l'ordiphone SP inclut
- un processeur CPU2, dit deuxième processeur,
- un module de stockage MEM2, dit deuxième module de stockage,
- un module de communication COM2, dit deuxième module de communication d'un premier type, pour établir une connexion avec l'extérieur, en particulier avec la passerelle GTW.

La passerelle GTW assure une interconnexion entre un réseau local et un réseau d'accès RES tel que le réseau ADSL (de l'anglais *Asymmetric Digital Subscriber Line*)*,* le réseau 3G, etc.

Dans notre exemple, la passerelle GTW communique avec l'ordinateur et l'ordiphone par le biais d'un réseau Wifi. Rappelons que l'appellation Wifi (pour « Wireless Fidelity ») rassemble des technologies de transmission sans fil permettant de créer des réseaux informatiques sans fil basés sur les normes de la famille IEEE 802.11. L'invention ne se limite pas à un réseau WIFI mais s'étend à d'autres types de réseaux, par exemple Bluetooth, NFC, Ethernet, etc.

Dans notre exemple, la passerelle GTW comprend des ressources physiques et logicielles. Une passerelle purement logicielle aurait pu aussi être utilisée pour la mise en œuvre du procédé. Cette passerelle de type logicielle aurait été par exemple stockée dans la deuxième mémoire MEM2 de la tablette TB et exécutée par le deuxième processeur.

Dans l'ordinateur et dans l'ordiphone, les différents modules sont reliés au processeur par l'intermédiaire d'un premier bus BUS1 et d'un deuxième bus BUS2, respectivement. Rappelons qu'un bus a pour fonction d'assurer le transfert de données numériques entre les différents circuits d'un ordinateur. Dans notre exemple, le bus en question inclut un bus de données et un bus de contrôle.

A noter aussi que, dans notre exemple, les modules de stockage décrits ci-dessus sont des mémoires permanentes, par exemple de type ROM (acronyme anglo-saxon de Read Only Memory) et que l'ordinateur et l'ordiphone incluent également une mémoire vive respective (non représentée) servant à stocker de manière non durable des données de calcul utilisées notamment lors de la mise en œuvre du procédé.

Le système comprend en outre un serveur connecté au réseau ADSL. Ce serveur stocke le service S1 accessible depuis l'ordinateur ou l'ordiphone au travers de la passerelle.

Dans la suite, deux modes de réalisation vont être décrits ; ces modes incluent des étapes (ETn,k) ; « n » désignant le mode de réalisation 1 ou 2 ; et « k » la référence d'une étape particulière.

Les deux modes de réalisation tirent profit de fonctions offertes par le protocole UPnP, notamment d'une fonctionnalité d'auto découverte décrite dans la norme UPnP incorporée par référence dans la présente demande. Le texte de la norme est intitulé « UPnP™ Device Architecture 1.1 , Document Revision Date: October 15, 2008 » accessible à l'adresse suivante http://upnp.org/specs/arch/UPnP-arch-DeviceArchitecture-v1.1.pdf - Chapitre 1 Discovery - 1.1 SSDP (Simple Service Discovery Protocol) et au chapitre 2 Description (Devices + Services).

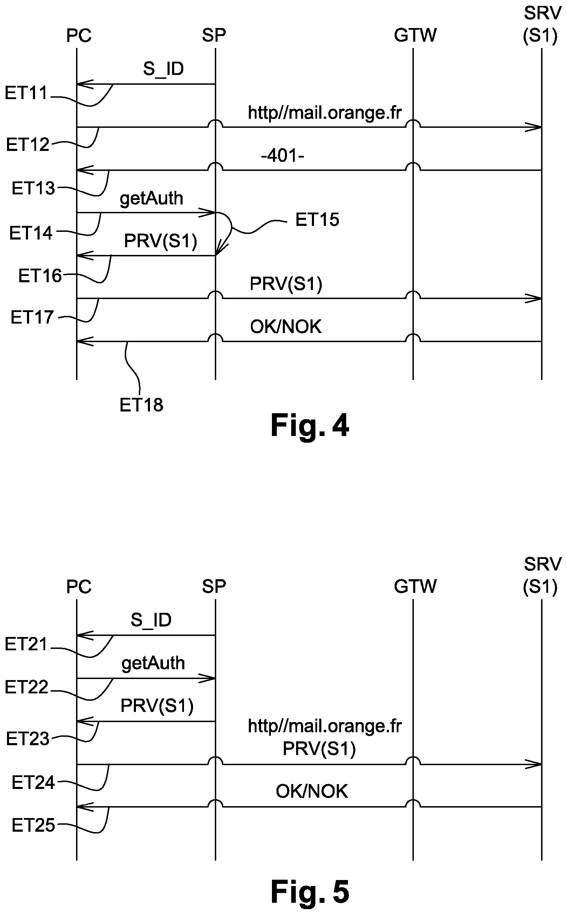

Un premier mode de réalisation est décrit en référence à la figure 4.

Lors d'une première étape ET11, grâce au protocole UPnP et à la fonctionnalité d'auto-découverte décrite dans la norme UPnP (sigle anglo-saxon de Universal Plug and Play), l'ordiphone SP expose à l'ordinateur PC un service Identité S-ID aptes à fournir une ou plusieurs preuves d'authentification réussies.

Lors d'une deuxième étape ET12, une requête d'accès au service S1 est émise par l'ordinateur PC à destination du serveur SRV. La requête d'accès est par exemple une URL (sigle de Uniform Resource Locator) du type http://mail.orange.fr/android-app saisie dans un navigateur WEB.

Lors d'une troisième étape ET13, le service S1 répond qu'une authentification est requise. La réponse est par exemple une réponse de type http affichant le texte « 401 Authentication required » signifiant qu'un accès au service requiert une authentification.

Lors d'une quatrième étape ET14, l'ordinateur PC ayant connaissance de l'existence du service identité S-ID sur l'ordiphone requiert auprès de l'ordiphone SP une preuve d'authentification réussie. Cette requête « getAuth»peut être la requête « SOAP ACTION » décrite dans la norme UPNP à l'adresse suivante : http://upnp.org/specs/arch/UPnP-arch-DeviceArchitecture-v1.1.pdf - Chapitre 3 Control - cf Figure 3-1 (Soap Action).

Lors d'une cinquième étape ET15, accessoirement, un programme CTRL requiert l'autorisation d'un utilisateur de l'ordiphone. A cet effet, dans notre exemple, un message s'affiche sur un écran ECR de l'ordiphone.

On fait l'hypothèse ici que l'utilisateur de l'ordiphone (non représenté) accepte de fournir une preuve d'authentification.

Lors d'une sixième étape ET16, la preuve d'authentification demandée PRV(S1), et éventuellement choisie par l'utilisateur, est fournie par l'ordiphone SP. Le message en question est par exemple le message SOAP RESP défini dans la norme UPNP à l'adresse suivante http://upnp.org/specs/arch/UPnP-arch-DeviceArchitecture-v1.1.pdf - Chapitre 3 Control - cf. Figure 3-1 (Soap Resp).

Lors d'une septième étape ET17, l'ordiphone SP accède au service S1 au travers de la passerelle GTW en fournissant la preuve d'authentification reçue à la cinquième étape ET5.

Lors d'une huitième étape ET18, le service S1 reçoit la preuve d'authentification PRV(S1) et vérifie que cette preuve est valide. Dans l'affirmative, le service S1 donne accès au service ; dans la négative, l'accès au service n'est pas autorisé.

Notons ici que l'ordre d'exécution des étapes peut varier. Par exemple, la première étape peut être exécutée à tout moment avant la quatrième étape ET4.

Aussi, selon un deuxième mode de réalisation, la preuve PRV(S1) peut être transmise de l'ordiphone SP à l'ordinateur PC avant l'accès au service. Ce deuxième mode de réalisation est décrit en référence à la figure 5. Les étapes sont les suivantes.

La première étape ET21 est la même que la première étape ET11 décrite en référence au premier mode.

Lors d'une deuxième étape ET22, équivalente à la quatrième étape ET14 décrite en référence au premier mode, l'ordinateur ayant connaissance de l'existence du service identité S-ID sur l'ordiphone requiert auprès de l'ordiphone une preuve d'authentification. Cette requête « getAuth» peut être la requête « SOAP ACTION »décrite dans la norme UPNP à l'adresse suivante : http://upnp.org/specs/arch/UPnP-arch-DeviceArchitecture-v1.1.pdf - Chapitre 3 Control - cf. Figure 3-1 (Soap Action).

Lors d'une troisième étape ET23, équivalente à la sixième étape ET16 décrite en référence au premier mode, la preuve d'authentification demandée PRV(S1) et éventuellement choisie par l'utilisateur est fournie par l'ordiphone. Le message en question est par exemple le message SOAP RESP défini dans la norme UPNP à l'adresse suivante http://upnp.org/specs/arch/UPnP-arch-DeviceArchitecture-v1.1.pdf - Chapitre 3 Control - cf. Figure 3-1 (Soap Resp).

Lors d'une quatrième étape ET24, équivalente à la deuxième étape ET12 décrite en référence au premier mode, une requête d'accès au service S1 est émise par l'ordinateur PC à destination du serveur SRV. La requête d'accès est par exemple une URL du type http://mail.oranae.fr/android-app saisie dans un navigateur WEB. Ici, l'ordiphone accède au service S1 au travers de la passerelle GTW en fournissant la preuve d'authentification reçue à la cinquième étape ET5.

La cinquième étape ET25 est la même que la huitième étape ET18 décrite en référence au premier mode de réalisation.

Ce deuxième mode évite, entre autres, la réception d'un message d'erreur visé à la troisième étape ET13 décrite en référence au premier mode.

Ces deux modes de réalisation peuvent faire l'objet de variantes.

Selon une première variante, l'ordiphone peut être équipé d'une carte à puce de type carte SIM (Subscriber Identity Module) gérée par exemple par un opérateur de télécommunication. La preuve d'authentification peut être stockée dans la carte SIM. Dans cette configuration, la preuve est une preuve d'authentification relative à l'opérateur gestionnaire de la carte SIM. Cette preuve est par exemple une preuve d'authentification réussie vis-à-vis d'un réseau RES de type 3G. L'invention permet donc un accès depuis un ordinateur dépourvu de carte SIM à un service nécessitant une carte SIM.

Lors de la première étape ET11 ou ET21 est mise en œuvre une fonctionnalité d'auto découverte. L'invention ne se limite pas à cet exemple. La recherche de la présence d'un service d'identité S-Id peut être réalisée par le biais d'une transmission d'une requête de recherche à destination de dispositifs cibles du réseau domestique. Dans cette configuration, dans notre exemple, l'ordinateur interroge l'ordiphone afin de savoir si ce dernier possède un service d'identité apte à fournir une ou plusieurs preuves. Si le réseau domestique avait été constitué d'autres dispositifs, par exemple un téléphone mobile, une télévision IP, l'ordinateur aurait transmis une requête à ces autres dispositifs ou qu'à une partie d'entre eux.

Notons enfin qu'une preuve peut être valide pour plusieurs services et non un seul service. Notons aussi qu'une preuve authentification réussie peut concerner une authentification réussie vis-à-vis d'un opérateur de télécommunication ; l'authentification concernée est par une authentification liée à un réseau de type 2G, 3G, 4G, ou autres. La preuve d'authentification réussie résultant peut alors permettre un accès à plusieurs services offerts par l'opérateur comme un accès un service de courrier électronique, à un service de télévision, à un service de vidéo à la demande, etc.

Aussi, l'ordiphone peut stocker plusieurs preuves d'authentification réussie relativement à plusieurs services différents et également relatives à plusieurs identités. Dans cette configuration,
- soit les différentes preuves sont transmises depuis l'ordiphone à l'ordinateur. A réception, une preuve est sélectionnée sur l'ordinateur.
- soit la sélection de la preuve est faite sur l'ordiphone, la sélection étant suivie d'un envoi de la preuve à l'ordinateur,
- soit l'ordinateur transmet à l'ordiphone un identifiant du service ; l'ordiphone fournissant en retour la preuve d'authentification associée à ce service,
- etc.

A noter aussi qu'une preuve peut être un cookie dans le cas d'une communication http. Rappelons ici que le sigle http désigne l'expression anglo-saxonne « HyperText Transfer Protocol » connue de l'homme du métier.

A noter aussi qu'un fournisseur de service correspond à un serveur dans lequel est stocké un ou plusieurs services.

La réalisation du procédé décrit ci-dessus s'effectue grâce à des modules installés sur l'ordinateur et l'ordiphone. En particulier, l'ordiphone SP comprend un module de transmission de preuve (MOD-TRS) apte à transmettre une preuve d'authentification réussie relative à un service, à destination de l'ordinateur à des fins d'authentification d'un utilisateur de l'ordinateur pour l'accès au service.

De la même manière, l'ordinateur PC comprend un module de traitement (MOD-TRT) apte à recevoir une preuve d'authentification réussie relative à un service, et à transmettre la preuve reçue sur le réseau à des fins d'authentification d'un utilisateur de l'ordinateur pour l'accès au service.

L'invention qui vient d'être décrite ci-dessus, peut être mise en œuvre au moyen de modules logiciels et/ou matériels. Dans la suite, le terme «module» peut correspondre soit à un composant logiciel, soit à un composant matériel, soit encore à un ensemble de composants matériels et/ou logiciels, aptes à mettre en œuvre la ou les fonctions décrites ci-dessus.

## Revendications

1. Procédé d'authentification d'un utilisateur d'un premier dispositif lors d'un accès à un service offert par un fournisseur de service, le premier dispositif appartenant à un groupe de dispositifs d'un réseau local incluant un second dispositif d'un utilisateur disposant d'un module d'identification pour s'identifier et s'authentifier auprès du service, **caractérisé en ce qu'**il comprend
- une étape de diffusion préalable au cours de laquelle le deuxième dispositif diffuse spontanément au premier dispositif, une possibilité de fourniture d'une preuve d'une authentification,
et **en ce que** lorsque le premier dispositif souhaite s'authentifier
- une étape de demande (ET14,ET22), par le premier dispositif au second dispositif, d'une preuve d'une authentification réussie vis-à-vis du service, la preuve incluant l'identité de l'utilisateur du second dispositif,
- une étape de transmission (ET16,ET23) depuis le second dispositif à destination du premier dispositif de la preuve,
- une étape d'authentification (ET18,ET25) de l'utilisateur du premier dispositif à la base de la preuve reçue.

2. Procédé d'authentification selon la revendication 1, **caractérisé en ce qu'**il comprend une étape préalable d'identification (ET11,ET21) d'au moins un dispositif du groupe apte à fournir une preuve.

3. Programme informatique comportant des instructions pour la mise en œuvre du procédé selon l'une des revendications précédentes, lorsque ce programme est exécuté par un processeur.

4. Dispositif (SP), dit second dispositif, comprenant un module de communication (COM2) pour communiquer avec un réseau local et accéder à un service (S1) apte à être délivré par un fournisseur de services et dont l'accès est précédé d'une d'authentification, **caractérisé en ce qu'**il comprend
- Un module de diffusion apte à diffuser spontanément, à d'autres dispositifs, une possibilité de fourniture d'une preuve d'une authentification,
- un module de transmission de preuve (MOD-TRS) apte à transmettre, sur demande, une preuve d'authentification réussie relative à un service à destination d'un premier dispositif à des fins d'authentification d'un utilisateur (UT) du premier dispositif pour l'accès au service.

5. Dispositif (PC), dit premier dispositif, comprenant un module de communication pour communiquer avec un réseau local et accéder à un service apte à être délivré par un fournisseur de services et dont l'accès est précédé d'une d'authentification, **caractérisé en ce qu'**il comprend un module de traitement (MOD-TRT)
- apte à recevoir depuis un deuxième dispositif (SP) un message indiquant une possibilité de fourniture d'une preuve d'une authentification, le message étant diffusé spontanément par le deuxième dispositif,
- apte à requérir une preuve au deuxième dispositif,
- apte à recevoir depuis le deuxième dispositif une preuve d'authentification réussie relative à un service,

6. Système informatique (SYS) comprenant un premier dispositif tel défini dans la revendication 5 et un second dispositif tel que défini dans la revendication 4.

## Patentansprüche

1. Verfahren zum Authentifizierung eines Anwenders einer ersten Vorrichtung bei einem Zugriff auf einen Dienst, der von einem Diensteanbieter angeboten wird, wobei die erste Vorrichtung zu einer Gruppe von Vorrichtungen eines lokalen Netzes gehört, die eine zweite Vorrichtung eines Anwenders enthält, die über ein Identifizierungsmodul zum Identifizieren und Authentifizierung bei dem Dienst verfügt, **dadurch gekennzeichnet, dass** es Folgendes umfasst:
- einen vorhergehenden Sendeschritt, in dem die zweite Vorrichtung an die erste Vorrichtung ohne Aufforderung eine Möglichkeit zum Liefern eines Authentifizierungsbeweises sendet,
und dann, wenn die erste Vorrichtung sich authentifizieren möchte,
- einen Schritt (ET14, ET22) des Anforderns durch die erste Vorrichtung bei der zweiten Vorrichtung eines Beweises einer erfolgreichen Authentifizierung bei dem Dienst, wobei der Beweis die Kennung des Anwenders der zweiten Vorrichtung enthält,
- einen Schritt (ET16, ET23) des Übertragens des Beweises von der zweiten Vorrichtung zu der ersten Vorrichtung,
- einen Schritt (ET18, ET25) der Authentifizierung des Anwenders der ersten Vorrichtung auf der Grundlage des empfangenen Beweises.

2. Authentifizierungsverfahren nach Anspruch 1, **dadurch gekennzeichnet, dass** es einen vorhergehenden Schritt (ET11, ET21) der Identifizierung wenigstens einer Vorrichtung der Gruppe, die einen Beweis liefern kann, umfasst.

3. Datenverarbeitungsprogramm, das Befehle für die Ausführung des Verfahrens nach einem der vorhergehenden Ansprüche, wenn dieses Programm von einem Prozessor ausgeführt wird, enthält.

4. Vorrichtung (SP), die zweite Vorrichtung genannt wird und ein Kommunikationsmodul (COM2) enthält, um mit einem lokalen Netz zu kommunizieren und um auf einen Dienst (S1) zuzugreifen, der von einem Diensteanbieter geliefert werden kann, wobei dem Zugriff eine Authentifizierung vorhergeht, **gekennzeichnet durch**:
- ein Sendemodul, das an andere Vorrichtungen ohne Aufforderung eine Möglichkeit zum Liefern eines Beweises einer Authentifizierung senden kann,
- ein Modul (MOD-TRS) zum Senden eines Beweises, das auf Anforderung einen Beweis einer erfolgreichen Authentifizierung in Bezug auf einen Dienst zu einer ersten Vorrichtung senden kann, damit sich ein Anwender (UT) der ersten Vorrichtung für den Zugriff auf den Dienst Authentifizierung kann.

5. Vorrichtung (PC), die erste Vorrichtung genannt wird, die ein Kommunikationsmodul umfasst, um mit einem lokalen Netz zu kommunizieren und um auf einen Dienst zuzugreifen, der von einem Diensteanbieter bereitgestellt werden kann, wobei dem Zugriff eine Authentifizierung vorhergeht, **dadurch gekennzeichnet, dass** sie ein Verarbeitungsmodul (MOD-TRT) umfasst zum:
- Empfangen von einer zweiten Vorrichtung (SP) einer Nachricht, die eine Möglichkeit zum Liefern eines Beweises einer Authentifizierung angibt, wobei die Nachricht von der zweiten Vorrichtung ohne Aufforderung gesendet wird,
- Anfordern eines Beweises bei der zweiten Vorrichtung,
- Empfangen von der zweiten Vorrichtung eines Beweises einer erfolgreichen Authentifizierung in Bezug auf einen Dienst.

6. Datenverarbeitungssystem (SYS), das eine erste Vorrichtung wie in Anspruch 5 definiert und eine zweite Vorrichtung wen Anspruch 4 definiert umfasst.

## Claims

1. Method for authenticating a user of a first device when accessing a service offered by a service provider, the first device belonging to a group of devices of a local area network including a second device of a user, which has an identification module for identifying and authenticating itself with the service, **characterized in that** it comprises
- a preliminary broadcasting step during which the second device spontaneously broadcasts, to the first device, a possibility of providing a proof of authentication,
and **in that**, when the first device wishes to authenticate itself,
- a step (ET14, ET22) of the first device requesting, from the second device, a proof of successful authentication with the service, the proof including the identity of the user of the second device,
- a step (ET16, ET23) of transmitting the proof from the second device to the first device,
- a step (ET18, ET25) of authenticating the user of the first device on the basis of the received proof.

2. Authentication method according to Claim 1, **characterized in that** it comprises a preliminary step (ET11, ET21) of identifying at least one device of the group that is able to provide a proof.

3. Computer program including instructions for implementing the method according to either one of the preceding claims when said program is executed by a processor.

4. Device (SP), known as the second device, comprising a communication module (COM2) for communicating with a local area network and accessing a service (S1), which is able to be delivered by a service provider and access to which is preceded by authentication, **characterized in that** it comprises
- a broadcasting module, which is able to spontaneously broadcast, to other devices, a possibility of providing a proof of authentication,
- a proof transmission module (MOD-TRS), which is able to transmit, on request, a proof of successful authentication in relation to a service to a first device in order to authenticate a user (UT) of the first device for access to the service.

5. Device (PC), known as the first device, comprising a communication module for communicating with a local area network and accessing a service, which is able to be delivered by a service provider and access to which is preceded by authentication, **characterized in that** it comprises a processing module (MOD-TRT), which is
- able to receive, from a second device (SP), a message indicating a possibility of providing a proof of authentication, the message being broadcast spontaneously by the second device,
- able to request a proof from the second device,
- able to receive, from the second device, a proof of successful authentication in relation to a service.

6. Computer system (SYS) comprising a first device as defined in Claim 5 and a second device as defined in Claim 4.
